# EUROPEAN PATENT SPECIFICATION

(11) **EP 3 636 980 B1**
(45) Date of publication and mention of the grant of the patent: **08.03.2023**
(21) Application number: 17912314.6
(22) Date of filing: 02.11.2017
(51) Int. Cl.: F16M 11/12, F16M 11/18, F16M 11/16

(54) **HANGING TYPE POSITIONING AND SUPPORTING DEVICE FOR LASER LEVEL**
POSITIONIERUNGS- UND STÜTZVORRICHTUNG VOM HÄNGETYP FÜR LASERWASSERWAAGE
DISPOSITIF DE POSITIONNEMENT ET DE SUPPORT DE TYPE SUSPENDU POUR NIVEAU LASER

(30) Priority: 30.05.2017 CN 201720612395 U
(43) Date of publication of application: 15.04.2020
(73) Proprietor: Zhejiang Shijing Tools Co., Ltd, Jinhua, Zhejiang 321200 (CN)
(72) Inventor: XU, Min, Jinhua Zhejiang 321200 (CN)
(74) Representative: Casalonga
(86) International application number: PCT/CN2017/109018
(87) International publication number: WO 2018/218866

(56) References cited:
- WO-A1-2014/070226
- CN-A- 103 676 437
- CN-A- 107 061 947
- CN-U- 201 739 736
- CN-U- 202 033 578
- CN-U- 202 195 252
- US-A1- 2010 321 646
- US-A1- 2014 077 053

## Description

### Technical Field

The present invention belongs to the field of supporting devices of a laser level or various measurement instruments, and particularly relates to a hanging type positioning and supporting device for a laser level.

### Background Art

Most of the existing measuring and positioning devices such as a laser level or a spirit level are directly placed on the ground or connected with a tripod by thread fixation via a threaded base for use. In an actual application process, when the measuring and positioning devices are placed directly on the ground for use, a height of a horizontal laser line thereof cannot be adjusted; when the measuring and positioning devices are placed on a tripod, on the one hand, the thread connection is troublesome; on the other hand, the tripod is large in an occupied area and cannot be close to a wall surface or a working surface during use. Document WO2014/070226 A1 discloses a known positioning device.

### Technical Problem

It is well-known that when a wall tile is stuck on an elevation wall, the wall tile is generally stuck layer by layer from bottom to top in a construction process, a cumulative error increases therewith, and also it is easier to shield the laser line, so that the measuring and positioning devices are affected in accuracy and even cannot be used at times; in addition, a dust amount is large in a construction process such as painting and tile paving, and it is extremely easy to cause a problem that the dust covers the laser line. Due to construction requirements, a position of the laser level also needs to be transformed frequently, and it is extremely easy to cause an error to affect the construction. In addition, a problem that the laser line is not parallel with the wall surface occurs when the laser line of the level is close to the working surface, which is difficult to be adjusted by a conventional manner; when the ground or the wall surface is inclined, the laser level is also difficult to project a standard reference state, thereby affecting the construction accuracy; when a distance from the working surface needs to be adjusted, it is also difficult to quickly adjust the position.

The object of the present invention is to solve the above problems and to provide a level supporting device that can be positioned at the top of a vertical working surface, and can quickly and finely adjust a position, an intersection angle, and an elevation angle of the laser level to facilitate accurate positioning.

### Technical Solution

The present invention relates to a hanging type positioning and supporting device for a laser level, including a fixed base, a sliding rod, and a connecting base, in which one end of the sliding rod is connected to the fixed base, the connecting base is movably connected to the sliding rod in a matching manner, and a fastening piece that connects and fixes the laser level is provided on the connecting base.

Further, the positioning and supporting device includes an adjusting bolt, in which the fixed base is provided with a hole through which the adjusting bolt penetrates, the adjusting bolt penetrates through the hole and is connected with a component on the sliding rod, and an adjusting knob is provided on an outer side of the adjusting bolt. The component on the sliding rod is a movable block, a threaded hole is formed in the movable block, and the threaded hole is matched with the adjusting bolt penetrating through the fixed base; one end of the sliding rod connected to the fixed base is provided with an insertion hole, and the movable block is placed in the insertion hole. After connecting the adjusting bolt that has penetrated through the fixed base with the movable block in the insertion hole on the sliding rod, the movable block in the sliding rod can be pulled up or laid down by rotating the adjusting knob, so that the sliding rod is lifted and lowered to implement adjustment of an elevation angle of the laser level.

Further, the connecting base includes a top connecting disk, a rotary disk and a base disk, the top connecting disk is provided with two lugs, and holes are formed in the lugs; the fastening piece that connects and fixes the laser level is provided on an outer side of the base disk.

Further, a transmission block is placed in the base disk of the connecting base, a hole is formed in the transmission block, and a nut is arranged in the hole; symmetrical through holes are formed in a base disk wall, a fine adjustment screw rod penetrates into a through hole on one side of the base disk wall, passes through the nut in the transmission block, strings the transmission block, and then penetrates through a through hole on the other side of the base disk wall, and adjusting knobs are arranged on both sides of the fine adjustment screw rod; a rectangular slot is formed in the rotary disk, and the transmission block is sleeved in the rectangular slot in a matching manner; a cylinder is arranged in the center of the base disk of the connecting base, the rotary disk sleeves the cylinder, a counter bore is formed in the center of the rotary disk, a bearing is sleeved in the counter bore, a pressing plate is covered on the bearing, and the pressing plate and the bearing are fixed by a screw; the top connecting disk of the connecting base sleeves the rotary disk and is fixed with the rotary disk by a screw or the like. Therefore, as long as the knobs on both sides of the fine adjustment screw rod are adjusted and the fine adjusting screw rod is rotated, the transmission block is moved, the transmission block causes a relative movement between the base disk and the rotary disk, and the level connected to the base disk is horizontally rotated and finely adjusted.

In addition, a through waist-shaped slot is formed in the sliding rod.

Further, the positioning and supporting device includes a quick-clamp device composed of a quick-clamp shaft, a quick-clamp sleeve and a compression spring, wherein the quick-clamp shaft presses the compression spring into the quick-clamp sleeve to form the quick-clamp device, and the quick-clamp device penetrates through the waist-shaped slot in the sliding rod and is mounted on the connecting base in a matching manner.

Further, the positioning and supporting device includes a movable support screw rod; holes are formed in the quick-clamp sleeve and the quick-clamp shaft; one end of the sliding rod not connected to the fixed base is provided with a hole penetrating to the waist-shaped slot, and the movable support screw rod penetrates into the sliding rod from the penetrating hole, penetrates through the holes in the quick-clamp sleeve and the quick-clamp shaft, and penetrates into the other end of the sliding rod.

Further, the end of the sliding rod not connected to the fixed base is provided with a groove, a stop collar is arranged in the groove, the stop collar sleeves the movable support screw rod, and an adjusting knob is arranged on an outer side of the movable support screw rod.

The movable support screw rod and the sliding rod form a supporting body, the quick-clamp device mounts the connecting base in a matching manner, and meanwhile clamps and sleeves the movable support screw rod, that is, the connecting base is movably connected to the sliding rod in a matching manner. Loosening the quick-clamp device allows the connecting base to move back and forth along the movable support screw rod to quickly adjust a position of the connecting base; certainly, the quick-clamp device can maintain a clamping state, and the movable support screw rod can be rotated by rotating the knob on the outer side of the movable support screw rod, thereby implementing fine adjustment of the position of the connecting base.

Further, the fixed base is provided with a groove, one end of the sliding rod is arranged in the groove in a matching manner; the fixed base is provided with a fixing hole or a fixing magnetic plate. Therefore, the fixed base is fixed to a wall surface or a stand column by means of a spike, a bolt, or magnetic adsorption, and the laser level is fixedly connected to the connecting base, thereby hanging and arranging the laser level.

The present invention provides a convenient and stable supporting device for a laser level, and the supporting device can conveniently implement accurate positioning of the laser level, including adjustment of a distance between the laser level and the wall surface, and a horizontal angle and a vertical elevation angle of the laser level, which can ensure that light projected by the laser level meets construction requirements, and there is no need to frequently move the laser level.

### Brief Description of Drawings

FIG. 1 is a schematic top view of a hanging type positioning and supporting device for a laser level;
FIG. 2 is a schematic bottom view of the hanging type positioning and supporting device for a laser level;
FIG. 3 is a schematic exploded view of a connecting base;
FIG. 4 is a schematic top exploded view of a rotary disk and a base disk of the connecting base;
FIG. 5 is a schematic view of a fixed base;
FIG. 6 is a schematic exploded view of the fixed base and components thereof;
FIG. 7 is a schematic exploded view of a sliding rod and components thereof; and
FIG. 8 is a schematic cross-sectional view of the hanging type positioning and supporting device for a laser level.

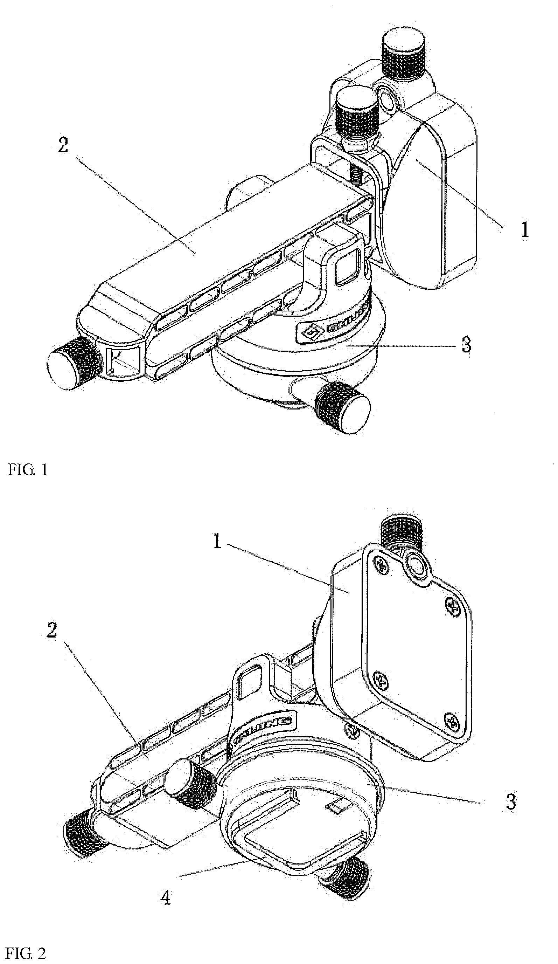

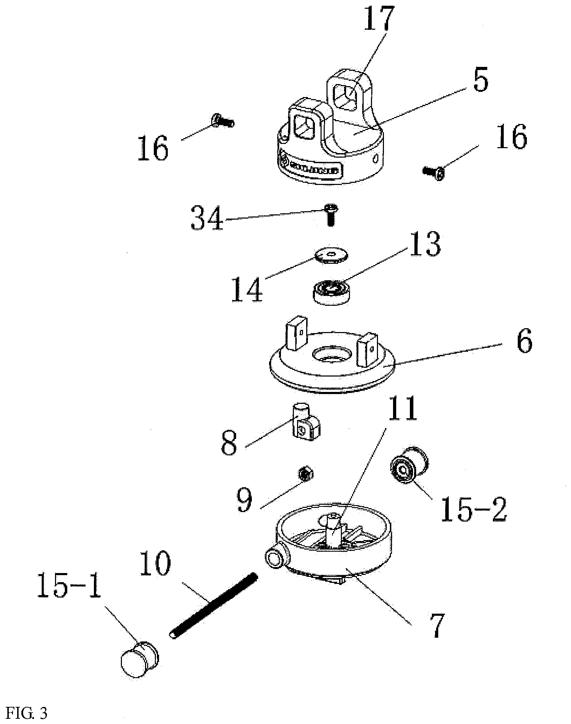

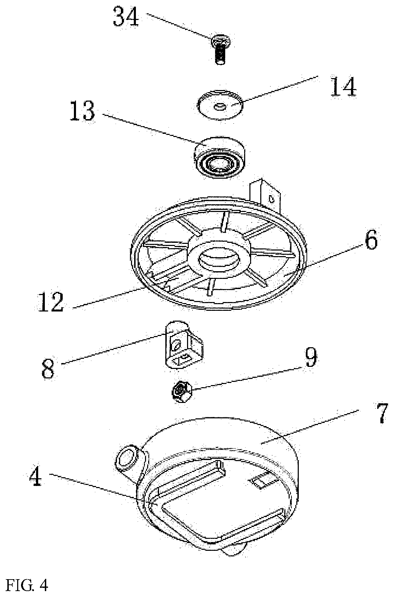

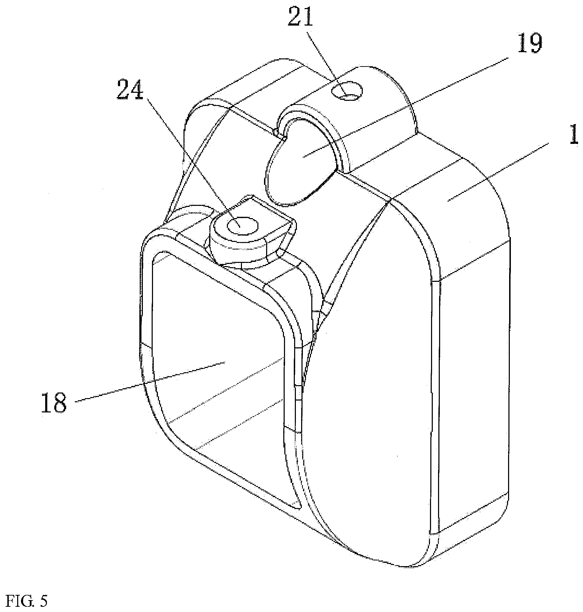

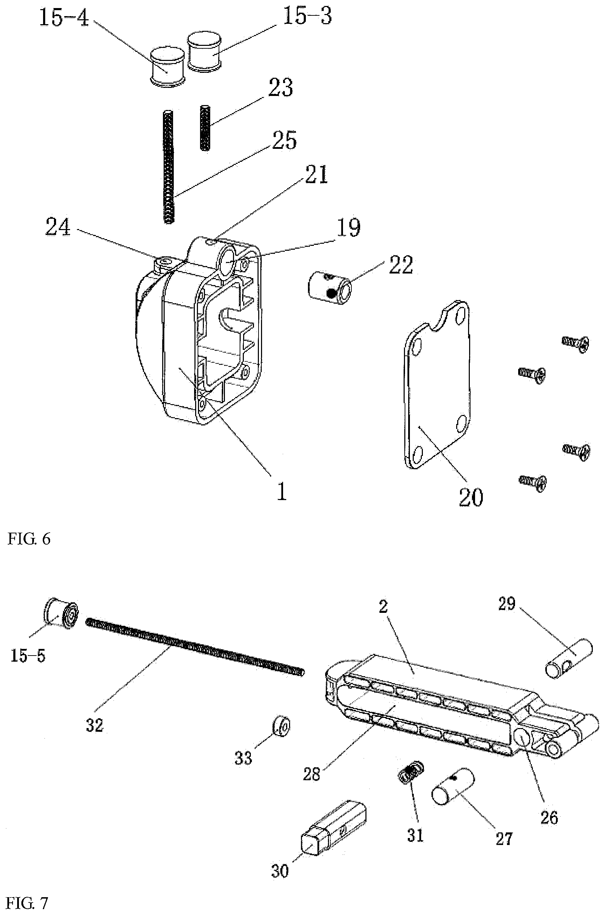

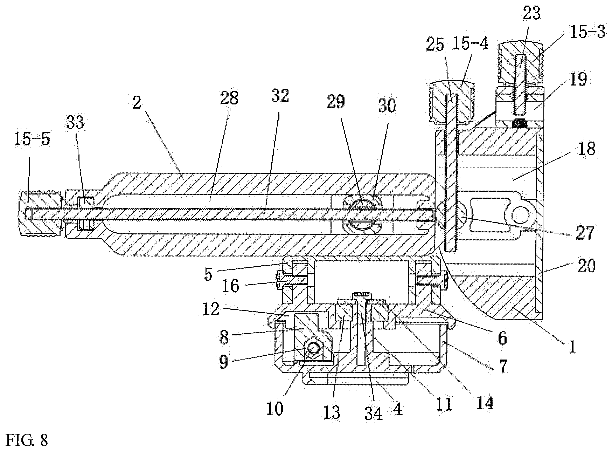

FIG. 1 to FIG. 8 show a preferred embodiment of the present invention, a hanging type positioning and supporting device for a laser level including three parts: a fixed base 1, a sliding rod 2, and a connecting base 3, in which one end of the sliding rod 2 is connected to the fixed base 1, the connecting base 3 is movably connected to the sliding rod 2 in a matching manner, and a fastening piece 4 that connects and fixes the laser level is provided on the connecting base 3.

The connecting base 3 includes a top connecting disk 5, a rotary disk 6, and a base disk 7, a fastening piece 4 that connects and fixes the laser level is arranged outside the base disk 7; the top connecting disk 5 is provided with two lugs, and holes 17 are formed in the lugs to mount a quick-clamp device, thereby connecting with the sliding rod 2 in a mating manner. A transmission block 8 is placed in the base disk 7, a hole is formed in the transmission block 8, and a hexagon nut 9 is arranged in the hole; symmetrical through holes are formed in a wall of the base disk 7, a fine adjustment screw rod 10 penetrates into a through hole on one side, passes through the hexagon nut 9 in the transmission block 8 to string the transmission block 8, then penetrates through a through hole on the other side, and adjusting knobs 15-1 and 15-2 are arranged on both sides of the fine adjustment screw rod 10. A rectangular slot 12 is formed in the rotary disk 6, and the transmission block 8 is sleeved in the rectangular slot 12 in a matching manner; a cylinder 11 is arranged in the center of the base disk 7, the rotary disk 6 sleeves the cylinder 11, a bearing 13 and a pressing plate 14 are sleeved in a counter bore in the center of the rotary disk 6, and are fixed with a screw 34. The top connecting disk 5 sleeves the rotary disk 6 and is fixed with the rotary disk 6 by screws 16.

A groove 18 is formed on the fixed base 1, and one end of the sliding rod 2 is arranged in the groove 18 in a matching manner. A fixing hole 19 and a magnetic plate 20 are provided on the fixed base 1. The magnetic plate 20 can be used for adsorbing a metal frame. To facilitate fixation, a fastening threaded hole 21 can be formed on the fixed base 1 above the fixing hole 19, a positioning sleeve 22 is placed in the fixing hole 19, and the fixed base 1 is provided with a fastening bolt 23 and a knob 15-3.

The fixing base 1 is provided with a hole 24 for penetrating an adjusting bolt 25, and the adjusting bolt 25 is provided with a knob 15-4; correspondingly, an insertion hole 26 is formed on one end of the sliding rod 2 connected to the fixed base 1, a movable block 27 is placed in the insertion hole 26, and a threaded hole in the movable block 27 is matched with the adjusting bolt 25. The adjusting bolt 25 penetrates through the hole 24, and then penetrates into the threaded hole of the movable block 27 in the sliding rod 2, which can fixedly connect the sliding rod 2 to the fixed base 1, and meanwhile can pull up or lay down the movable block 27 in the sliding rod 2 by adjusting the knob 15-4, so that the sliding rod 2 is lifted or lowered to adjust a vertical elevation angle of the laser level.

The slide rod 2 is provided with a through waist-shaped slot 28 and a quick-clamp device composed of a quick-clamp shaft 29, a quick-clamp sleeve 30, and a compression spring 31. The quick-clamp shaft 29 presses the compression spring 31 into the quick-clamp sleeve 30 to form the quick-clamp device, and holes are formed on the quick-clamp shaft 29 and the quick-clamp sleeve 30; the quick-clamp device penetrates through the waist-shaped slot 28 in the sliding rod 2 and is mounted in the hole 17 on the connecting disk 5 of the connecting base 3 in a matching manner. In addition, one end of the sliding rod 2 not connected to the fixed base 1 is provided with a hole penetrating to the waist-shaped slot, and a movable support screw rod 32 penetrates into the sliding rod 2 from the penetrating hole, penetrates through the holes in the quick-clamp sleeve 30 and the quick-clamp shaft 29, and penetrates into the other end of the sliding rod 2. Thus, the connecting base 3 is connected with the sliding rod 2. In order to ensure that the movable support screw rod 32 can rotate and does not fall out, a groove is provided at the end of the sliding rod 2, the groove communicates with the hole penetrating to the waist-shaped slot, a stop collar 33 is arranged in the groove, and the movable support screw rod 32 penetrates into the sliding rod 2 through the stop collar 33. A knob 15-5 is arranged on an outer side of the movable support screw rod 32 for rotating adjustment.

### Industrial Applicability

The present invention provides the hanging type positioning and supporting device for a laser level, the laser level can be conveniently and stably installed above a working surface, a distance between the laser level and the wall surface, and a horizontal angle and a vertical elevation angle of the laser level can be adjusted, so that accurate positioning of the laser level can be ensured.

It should be understood by those of ordinary skill in the art that improvements or alterations may be made in light of the above description, and all the improvements and alterations fall within the scope of the appended claims of the present invention.

## Claims

1. A hanging type positioning and supporting device for a laser level, comprising:
a fixed base (1); a sliding rod (2); and a connecting base (3), wherein
one end of the sliding rod (2) is connected to the fixed base (1), the connecting base (3) is movably connected to the sliding rod (2) in a matching manner, and a fastening piece (4) that connects and fixes the laser level is provided on the connecting base (3),
wherein
the connecting base (3) includes a top connecting disk (5), a rotary disk (6) and a base disk (7), the connecting disk is provided with two lugs, and holes (17) are formed in the lugs; and
the fastening piece (4) that connects and fixes the laser level is provided on an outer side of the base disk (7),
**characterized in that**
a transmission block (8) is placed in the base disk (7) of the connecting base (3), a hole (17) is formed in the transmission block (8), and a nut (9) is arranged in the hole (17);
symmetrical through holes are formed in a base disk wall, a fine adjustment screw rod (10) penetrates through a through hole on one side of the base disk wall, passes through the nut (9) in the transmission block (8) to string the transmission block (8), then penetrates through a through hole on the other side of the base disk wall, and adjusting knobs (15-1, 15-2) are arranged on both sides of the fine adjustment screw rod (10);
a rectangular slot (12) is formed in the rotary disk (6), and the transmission block (8) is sleeved in the rectangular slot (12) in a matching manner;
a cylinder (11) is arranged in the center of the base disk (7), the rotary disk (6) sleeves the cylinder (11), a bearing (13) is sleeved in a counter bore of the rotary disk (6), a pressing plate (14) is arranged on the bearing (13) and is fixed by a screw (16); and
the top connecting disk (5) of the connecting base (3) sleeves the rotary disk (6) and is fixed with the rotary disk (6).

2. The hanging type positioning and supporting device for a laser level according to claim 1, further comprising:
an adjusting bolt (25), wherein
the fixed base (1) is provided with a hole (17) for penetrating through the adjusting bolt (25), the adjusting bolt (25) penetrates through the hole (17) and is connected with a component on the sliding rod (2), and an adjusting knob (15-1, 15-2) is provided on an outer side of the adjusting bolt (25).

3. The hanging type positioning and supporting device for a laser level according to claim 2, wherein
the component on the sliding rod (2) is a movable block (27), a threaded hole (21) is formed in the movable block (27), and the threaded hole (21) is matched with the adjusting bolt (25) penetrating through the fixed base (1); and
one end of the sliding rod (2) connected to the fixed base (1) is provided with an insertion hole (26), and the movable block (27) is placed in the insertion hole (26).

4. The hanging type positioning and supporting device for a laser level according to claim 1, wherein
a through waist-shaped slot (28) is formed in the sliding rod (2).

5. The hanging type positioning and supporting device for a laser level according to claim 4, further comprising
a quick-clamp device composed of a quick-clamp shaft (29), a quick-clamp sleeve (30) and a compression spring (31), wherein
the quick-clamp shaft (29) presses the compression spring (31) into the quick-clamp sleeve (30) to form the quick-clamp device, and the quick-clamp device penetrates through the waist-shaped slot (28) in the sliding rod (2) and is mounted on the connecting base (3) in a matching manner.

6. The hanging type positioning and supporting device for a laser level according to claim 5, further comprising
a movable support screw rod (32), wherein
holes (17) are formed in the quick-clamp sleeve (30) and the quick-clamp shaft (29);
one end of the sliding rod (2) not connected to the fixed base (1) is provided with a hole (17) penetrating to the waist-shaped slot (28), and the movable support screw rod (32) penetrates into the sliding rod (2) from the penetrating hole, penetrates through the holes (17) in the quick-clamp sleeve (30) and the quick-clamp shaft (29), and penetrates into the other end of the sliding rod (2).

7. The hanging type positioning and supporting device for a laser level according to claim 6, wherein
the end of the sliding rod (2) not connected to the fixed base (1) is provided with a groove (18), a stop collar (33) is arranged in the groove (18), the stop collar (33) sleeves the movable support screw rod (32), and an adjusting knob (15-1, 15-2) is arranged on an outer side of the movable support screw rob (32).

8. The hanging type positioning and supporting device for a laser level according to claim 2, wherein
the fixed base (1) is provided with a groove (18), one end of the sliding rod (2) is arranged in the groove (18) in a matching manner; and
the fixed base (1) is provided with a fixing hole (19) or a fixing magnetic plate.

## Patentansprüche

1. Hängende Positionierungs- und Haltevorrichtung für ein Lasernivellier, umfassend:
eine feste Basis (1); eine Schiebestange (2); und eine Verbindungsbasis (3), wobei
ein Ende der Schiebestange (2) mit der festen Basis (1) verbunden ist, die Verbindungsbasis (3) mit der Schiebestange (2) in passender Weise beweglich verbunden ist, und an der Verbindungsbasis (3) ein Befestigungsteil (4) vorgesehen ist, das das Lasernivellier anschließt und fixiert,
wobei
die Verbindungsbasis (3) eine obere Verbindungsscheibe (5), eine Drehscheibe (6) und eine Basisscheibe (7) umfasst, die Verbindungsscheibe mit zwei Laschen versehen ist und in den Laschen Löcher (17) ausgebildet sind; und
das Befestigungsteil (4), das das Lasernivellier anschließt und fixiert, an einer Außenseite der Grundscheibe (7) vorgesehen ist,
**dadurch gekennzeichnet, dass**
ein Übertragungsblock (8) in der Basisscheibe (7) der Verbindungsbasis (3) angeordnet ist, ein Loch (17) im Übertragungsblock (8) ausgebildet ist und eine Mutter (9) im Loch (17) angeordnet ist;
symmetrische Durchgangslöcher in einer Basisscheibenwand ausgebildet sind, eine Schraubenstange zur Feineinstellung (10) durch ein Durchgangsloch auf einer Seite der Basisscheibenwand hindurchgeht, dann durch die Mutter (9) im Übertragungsblock (8) hindurchgeht, um den Übertragungsblock (8) aufzuspannen, dann durch ein Durchgangsloch auf der anderen Seite der Basisscheibenwand hindurchgeht, und Einstellknöpfe (15-1, 15-2) auf beiden Seiten der Schraubenstange zur Feineinstellung (10) angeordnet sind;
in der Drehscheibe (6) ein rechteckiger Schlitz (12) ausgebildet ist und der Übertragungsblock (8) im rechteckigen Schlitz (12) passend umhüllt ist;
in der Mitte der Grundscheibe (7) ein Zylinder (11) angeordnet ist, die Drehscheibe (6) den Zylinder (11) umschließt, in einer Senkbohrung der Drehscheibe (6) ein Lager (13) eingesetzt ist, auf dem Lager (13) eine Druckplatte (14) angeordnet ist, die mit einer Schraube (16) befestigt ist; und
die obere Verbindungsscheibe (5) der Verbindungsbasis (3) die Drehscheibe (6) umschließt und mit der Drehscheibe (6) fest verbunden ist.

2. Hängende Positionierungs- und Haltevorrichtung für ein Lasernivellier nach Anspruch 1, ferner umfassend:
eine Justierschraube (25), wobei
die feste Basis (1) mit einer Bohrung (17) zum Durchstecken der Justierschraube (25) versehen ist, die Justierschraube (25) durch die Bohrung (17) geht und mit einem Bauteil an der Schiebestange (2) verbunden ist, und an einer Außenseite der Justierschraube (25) ein Einstellknopf (15-1, 15-2) vorgesehen ist.

3. Hängende Positionierungs- und Haltevorrichtung für ein Lasernivellier nach Anspruch 2, wobei
das Bauelement an der Schiebestange (2) ein beweglicher Block (27) ist, in dem beweglichen Block (27) eine Gewindebohrung (21) ausgebildet ist und die Gewindebohrung (21) mit der durch die feste Basis (1) hindurch gehenden Justierschraube (25) zusammenwirkt; und
ein Ende der Schiebestange (2), die mit der festen Basis (1) verbunden ist, ist mit einem Einführungsloch (26) versehen, und der bewegliche Block (27) wird in das Einführungsloch (26) eingesetzt.

4. Hängende Positionierungs- und Haltevorrichtung für ein Lasernivellier nach Anspruch 1, wobei
ein durchgehender taillenförmiger Schlitz (28) in der Schiebestange (2) ausgebildet ist.

5. Hängende Positionierungs- und Haltevorrichtung für ein Lasernivellier nach Anspruch 4, ferner umfassend eine Schnellspannvorrichtung, bestehend aus einer Schnellspannwelle (29), einer Schnellspannhülse (30) und einer Druckfeder (31), wobei
die Schnellspannwelle (29) die Druckfeder (31) in die Schnellspannhülse (30) drückt, um die Schnellspannvorrichtung zu bilden, und die Schnellspannvorrichtung durch den taillenförmigen Schlitz (28) in der Schiebestange (2) hindurchgeht und auf der Verbindungsbasis (3) passend montiert ist.

6. Hängende Positionierungs- und Haltevorrichtung für ein Lasernivellier nach Anspruch 5, ferner umfassend eine bewegliche Stützspindel (32), wobei Löcher (17) in der Schnellspannhülse (30) und der Schnellspannwelle (29) ausgebildet sind;
ein Ende der Schiebestange (2), das nicht mit der festen Basis (1) verbunden ist, mit einem Loch (17) versehen ist, das in den taillenförmigen Schlitz (28) eindringt, und die bewegliche Stützspindel (32) dringt von dem Durchgangsloch in die Schiebestange (2) ein, geht durch die Löcher (17) in der Schnellspannhülse (30) und der Schnellspannwelle (29) und dringt in das andere Ende der Schiebestange (2) ein.

7. Hängende Positionierungs- und Haltevorrichtung für ein Lasernivellier nach Anspruch 6, wobei
das Ende der Schiebestange (2), das nicht mit der festen Basis (1) verbunden ist, mit einer Nut (18) versehen ist, ein Stoppring (33) in der Nut (18) angeordnet ist, der Stoppring (33) die bewegliche Stützspindel (32) ummantelt, und ein Einstellknopf (15-1, 15-2) an einer Außenseite der beweglichen Stützspindel (32) angeordnet ist.

8. Hängende Positionierungs- und Haltevorrichtung für ein Lasernivellier nach Anspruch 2, wobei
die feste Basis (1) mit einer Nut (18) versehen ist, ein Ende der Schiebestange (2) in der Nut (18) passend angeordnet ist; und
die feste Basis (1) mit einem Befestigungsloch (19) oder einer Befestigungsmagnetplatte versehen ist.

## Revendications

1. Dispositif de positionnement et de support de type suspendu pour un niveau laser, comprenant :
une base fixe (1) ; une tige coulissante (2) ; et une base de liaison (3), dans lequel
une extrémité de la tige coulissante (2) est reliée à la base fixe (1), la base de liaison (3) est reliée de manière mobile à la tige coulissante (2) par appariement, et une pièce de serrage (4) qui relie et fixe le niveau laser est prévue sur la base de liaison (3),
dans lequel
la base de liaison (3) comporte un disque de liaison supérieur (5), un disque rotatif (6) et un disque de base (7), le disque de liaison est doté de deux ergots, et des trous (17) sont formés dans les ergots ; et
la pièce de serrage (4) qui relie et fixe le niveau laser est prévue sur un côté extérieur du disque de base (7),
**caractérisé en ce que**
un bloc de transmission (8) est placé dans le disque de base (7) de la base de liaison (3), un trou (17) est formé dans le bloc de transmission (8), et un écrou (9) est agencé dans le trou (17) ;
des trous traversants symétriques sont formés dans une paroi de disque de base, une tige de vis de réglage fin (10) pénètre à travers un trou traversant d'un côté de la paroi de disque de base, passe à travers l'écrou (9) dans le bloc de transmission (8) pour tendre le bloc de transmission (8), puis pénètre à travers un trou traversant de l'autre côté de la paroi de disque de base, et des boutons de réglage (15-1, 15-2) sont agencés des deux côtés de la tige de vis de réglage fin (10) ;
une fente rectangulaire (12) est formée dans le disque rotatif (6), et le bloc de transmission (8) est emmanché dans la fente rectangulaire (12) par appariement ;
un cylindre (11) est agencé au centre du disque de base (7), le disque rotatif (6) s'emmanche avec le cylindre (11), un palier (13) est emmanché dans un lamage du disque rotatif (6), une plaque de pression (14) est agencée sur le palier (13) et est fixée par une vis (16) ; et
le disque de liaison supérieur (5) de la base de liaison (3) s'emmanche avec le disque rotatif (6) et est fixé avec le disque rotatif (6).

2. Dispositif de positionnement et de support de type suspendu pour un niveau laser selon la revendication 1, comprenant en outre :
un boulon de réglage (25), dans lequel
la base fixe (1) est dotée d'un trou (17) pour pénétrer à travers le boulon de réglage (25), le boulon de réglage (25) pénètre à travers le trou (17) et est relié à un composant sur la tige coulissante (2), et un bouton de réglage (15-1, 15-2) est prévu sur un côté extérieur du boulon de réglage (25).

3. Dispositif de positionnement et de support de type suspendu pour un niveau laser selon la revendication 2, dans lequel
le composant sur la tige coulissante (2) est un bloc mobile (27), un trou fileté (21) est formé dans le bloc mobile (27), et le trou fileté (21) est apparié avec le boulon de réglage (25) pénétrant à travers la base fixe (1) ; et
une extrémité de la tige coulissante (2) reliée à la base fixe (1) est dotée d'un trou d'insertion (26), et le bloc mobile (27) est placé dans le trou d'insertion (26).

4. Dispositif de positionnement et de support de type suspendu pour un niveau laser selon la revendication 1, dans lequel
une fente traversante en forme de taille (28) est formée dans la tige coulissante (2).

5. Dispositif de positionnement et de support de type suspendu pour un niveau laser selon la revendication 4, comprenant en outre
un dispositif de raccordement rapide se composant d'un arbre de raccordement rapide (29), d'un manchon de raccordement rapide (30) et d'un ressort de compression (31), dans lequel
l'arbre de raccordement rapide (29) presse le ressort de compression (31) dans le manchon de raccordement rapide (30) pour former le dispositif de raccordement rapide, et le dispositif de raccordement rapide pénètre à travers la fente en forme de taille (28) dans la tige coulissante (2) et est monté sur la base de liaison (3) par appariement.

6. Dispositif de positionnement et de support de type suspendu pour un niveau laser selon la revendication 5, comprenant en outre
une tige de vis de support mobile (32), dans lequel des trous (17) sont formés dans le manchon de raccordement rapide (30) et l'arbre de raccordement rapide (29) ;
une extrémité de la tige coulissante (2) non reliée à la base fixe (1) est dotée d'un trou (17) pénétrant dans la fente en forme de taille (28), et la tige de vis de support mobile (32) pénètre dans la tige coulissante (2) à partir du trou de pénétration, pénètre à travers les trous (17) dans le manchon de raccordement rapide (30) et l'arbre de raccordement rapide (29), et pénètre dans l'autre extrémité de la tige coulissante (2).

7. Dispositif de positionnement et de support de type suspendu pour un niveau laser selon la revendication 6, dans lequel
l'extrémité de la tige coulissante (2) non reliée à la base fixe (1) est dotée d'une rainure (18), un collier de butée (33) est agencé dans la rainure (18), le collier de butée (33) s'emmanche avec la tige de vis de support mobile (32), et un bouton de réglage (15-1, 15-2) est agencé sur un côté extérieur de la tige de vis de support mobile (32).

8. Dispositif de positionnement et de support de type suspendu pour un niveau laser selon la revendication 2, dans lequel
la base fixe (1) est dotée d'une rainure (18), une extrémité de la tige coulissante (2) est agencée dans la rainure (18) par appariement ; et
la base fixe (1) est dotée d'un trou de fixation (19) ou d'une plaque magnétique de fixation.
